# EUROPEAN PATENT APPLICATION

(11) **EP 2 131 168 A1**
(43) Date of publication of application: **09.12.2009**
(21) Application number: 08010200.7
(22) Date of filing: 04.06.2008
(51) Int. Cl.: G01K 17/00, G01K 17/08, G01N 25/18

(54) **Method and device for detecting capacity changes in a fluid and turbine**

(71) Applicant: SIEMENS AKTIENGESELLSCHAFT, 80333 München (DE)
(72) Inventor: Nilsson, Ulf, LE8 6HN Whetstone Leichester (GB)

(57) **Abstract**

A method for detecting capacity changes in a fluid in a flow channel (1) is disclosed. The method comprises the steps of leading the fluid to a surface (8) of a defined area A, where the heat transfer is enhanced compared with other portions of the flow channel (1); measuring the temperature T₀ of the fluid; heating the surface (8); recording the power ΔQ/Δt which is supplied during heating the surface (8); measuring the temperature T₁ of the heated surface (8); determining the heat transfer coefficient h of the fluid; and comparing the determined heat transfer coefficient h with a reference. Moreover, a device (3) for performing the inventive method is provided.

## Description

The present invention relates to a method for detecting capacity changes in a fluid. It further relates to a device for detecting capacity changes in a fluid and to a turbine, especially a gas turbine.

In order for the cooling and sealing air system in, for example, a gas turbine to work properly the supply conditions of the air or the used other fluid has to be selected with care. On the one handy the small difference between the supply pressure and the pressure at the location where the fluid, for example the air, is used means low losses and a higher thermodynamic efficiency of the cycle. On the other hand a too low pressure margin may introduce undesired changes in the flow characteristics at off design operating/load points or when the engine components has experienced wear after long operation. Those undesired changes in flow characteristics may take the form of reduced or increased air flows leading to a decreased cooling or sealing effectiveness. In order to determine the cause of performance deterioration of the gas turbine in service it has to be inspected thoroughly, using boroscope techniques and almost always be disassembled into its smallest parts. This is a painstaking and time consuming exercise which keeps the gas turbine out of operation. If there was a way of quickly finding out where the problem is located and approximately how severe it is without first dismantling the gas turbine the downtime would be reduced and the reliability and availability performance improved.

The actual effectiveness of the supplied fluid, for example air, as cooling or sealing medium depends on a combination of temperature, pressure and mass flow, for example velocity. Therefore all factors have to be considered in combination.

Inspection and disassembly of the gas turbine during service, as described above, is one means to deal with undesired changes in local flow characteristics. Other possibilities are conventional stagnation temperature measurements of the air supply using thermocouples, pressure and/or temperature measurement in particularly critical areas to trigger switch-over to a higher pressure supply, variable mass flow control, for example by using valves, depending on the measured stagnation temperature or stagnation pressure. If only one parameter is measured there is an implicit assumption that there is always a direct and known relation between the pressure, temperature and mass flow, which in most cases is not true.

In US 3,754,201 a heat sensitivity detector including a thermistor in contact with a thin wall facing the fluid being measured is described.

In the articles "Experimental investigation of a cooling system entrance for an annular gas turbine combustion chamber" by Lars O. Lindqvist, Ulf E. Nilsson and Jonas N. Hylén, which was presented at the International Gas Turbine & Aeroengine Congress & Exhibition in Orlando, Florida, June 2-5, 1997 and "Experimental investigation of GTX100 combustor liner cooling system" by Ulf E. Nilsson, Lars O. Lindqvist, Ingemar A. G. Eriksson and Jonas N. Hylén which was presented at the International Gas Turbine & Aeroengine Congress & Exhibition in Stockholm, Sweden, June 2-5, 1998 measurement techniques used in experiments to determine heat transfer coefficients in cooling channels are described.

Variations on methods used in flow meters based on heating the fluid and measuring the temperature at two different locations can be found in US 2,972,885, US 3,352,154, US 3,500,686, US 5,339,688, US 3,798,967 and EP 0 021 291.

The use of sectors of heated elements, on a body surrounded by moving fluid, to determine the velocity and direction of the fluid is described in US 3,498,127, US 3,991,613 and EP 0 569 129.

In US 4,061,029 flow separation detector where the temperature is monitored for adjacent thermocouples embedded in a heated surface exposed by a flowing fluid is described.

Examples of thermal anemometer designs for velocity measurements are described in US 5,218,865, US 4,304,130 and US 5,388,457.

In US 4,418,568 a hot film/swirl air flow meter comprising a venturi bypass for mass flow measurement is described.

It is a first objective of the present invention to provide a method for detecting capacity changes in a fluid in a flow channel. It is a second objective of the present invention to provide a device for detecting capacity changes in a fluid by determining the heat transfer coefficient of the fluid. It is a third objective of the present invention to provide an advantageous turbine.

The first objective is solved by a method as claimed in Claim 1. The second objective is solved by a device as claimed in Claim 10. The third objective is solved by a turbine as claimed in Claim 15. The depending claims define further developments of the present invention.

The inventive method for detecting capacity changes in a fluid in a flow channel comprises the steps of:
- leading the fluid to a surface of a defined area A, where the heat transfer is enhanced compared with other portions of the flow channel,
- measuring the temperature To of the fluid,
- heating the surface,
- recording the power ΔQ/Δt which is supplied during heating the surface,
- measuring the temperature T₁ of the heated surface,
- determining the heat transfer coefficient h of the fluid, and
- comparing the determined heat transfer coefficient h with a reference.

In the context of the present invention the flow channel may for example be a conduit.

The inventive method is based on measurement and comparison of the change in the heat transfer coefficient, which captures the contributions from pressure, temperature and mass flow, in for example one measurement using a single measurement instrument.

The heat transfer coefficient h may be determined using the area A, the temperature To of the fluid, the recorded power ΔQ/Δt and the temperature T₁ of the heated surface. The heat transfer coefficient h can, for example, be calculated by using the equation h = ΔQ/[Δt*A*(T₁-T₀)].

The temperature To of the fluid can be measured at the surface, when the surface is not heated. This makes it possible to determine the heat transfer coefficient h by measuring the temperature at least at two different conditions, To and T₁. The temperatures T₀ and T₁ can be measured especially using a single thermocouple or alternatively a resistive film or similar. This means that the temperature To of the fluid may be measured at the surface when the surface is not heated. Moreover, the temperature To of the fluid and the temperature T₁ of the heated surface can be measured by means of the same measurement instrument. Generally the temperature To of the fluid and/or the temperature T₁ of the heated surface may be measured by means of a thermocouple or a resistive film.

Advantageously the heat transfer of the surface can be enhanced by means at least one turbulator. This means, that the used temperature sensor may be attached to the surface, such that it measures the temperature at a specific point on said surface, where the heat transfer is enhanced from heat transfer enhancing features, for example turbulators, on the body comprising the said surface. Furthermore, the surface comprising the temperature sensor can be heated to different temperatures using and external power supply.

When the external power supply is switched off the temperature sensor will, due to the enhanced heat transfer coefficient where it is located, measure a temperature very close to the temperature of the air flowing past the sensor in the conduit where the measurement is taking place.

By measuring the temperature detected by the temperature sensor at two different conditions during at least one condition where the incorporated heating element has been switched on and the power supplied has been recorded, the heat transfer coefficient can be determined by subtracting the two corresponding flux equations from each other. The result is the equation given above. The flow parameters, for example pressure, air bulk temperature and mass flow, in the conduit can be considered unchanged when the heater is switched on provided that the heated surface area A is small.

The determined heat transfer coefficient may be compared with a reference value or a reference range from a nominal or new engine at the same operating point. This can be made using lookup tables.

The fluid may be used for a cooling and/or sealing a component. Especially, the fluid may be used in a turbine, for example in a gas turbine. Furthermore, the fluid may be air. In case of a gas turbine the heat transfer coefficient obtained from the measurement can be compared with the value and/or range from a nominal and/or new gas turbine at the same operating point.

Generally, that temperature To of the fluid and/or the temperature T₁ of the heated surface can be measured continuously or in a regular interval or intermittently or in combination with service activities.

If a deviation between the determined heat transfer coefficient and the reference is found this can have several causes depending on where the measurement was taken. If, for example, the measurement was taken in a serial supply a decreased heat transfer coefficient may be caused by a decreased performance of a used compressor, lower flow, lower pressure at the bleed from where the fluid, for example cooling air, is supplied. This can be confirmed by comparing the measured temperature when the heating element was switched off. Another reason for decreased heat transfer coefficient in a serial supply can be a blockage upstream or downstream of the measurement location. If the measured temperature when the heating element is switched off is as usual then the supply pressure at the compressor bleed can be measured for further confirmation, indicating that the blockage is downstream of the measurement location.

If the measurement was taken in a serial supply an increased heat transfer coefficient may be caused by an increased flow area downstream of the measurement location due to damage or wear, allowing more mass flow through the conduit.

If the measurement was taken in a parallel supply, for example parallel to leakage flow through a seal arrangement, a decreased heat transfer coefficient may be caused by an increased flow area in the parallel flow of the measurement location due to damage or wear, allowing less mass flow through the conduit. This can be confirmed by comparing the measured temperature when the heating element was switched off. Other reasons for a decreased heat transfer coefficient in a parallel supply may be a blockage upstream or downstream of the measurement location or increased back pressure downstream of the two parallel flows monitored.

If the measurement was taken in a parallel supply, for example parallel to leakage flow through a seal arrangement, an increased heat transfer coefficient may be caused by an increased flow area down stream of the measurement location due to damage or wear, allowing more mass flow through to the conduit. Another reason may be a blockage in the parallel flow path monitored.

By combining pairs of measurements as described above from different operating conditions of the gas turbine, and measuring a pressure, for example at the compressor bleed, further assuming the volume flow to be constant, which is reasonable if the pressure ratio between the supply and the delivery point of the air is fairly constant, then approximation of the velocity in the conduit can be made from the heat transfer coefficient using Reynolds number.

The inventive device for detecting capacity changes in a fluid by determining the heat transfer coefficient of the fluid comprises a flow channel for leading the fluid, at least one temperature sensor, a surface with an enhanced heat transfer compared with the heat transfer from the other portions of the flow channel, and a device for heating the surface. The at least one temperature sensor is located at the surface with the enhanced heat transfer. The inventive device can especially be used to perform the inventive method. In the context of the present invention the flow channel may for example be a conduit.

The temperature sensor can be placed advantageously at or near the point where the highest heat transfer occurs. Moreover, the inventive device may comprise at least one turbulator for enhancing the heat transfer of the surface. The temperature sensor may especially be placed at an attachment point downstream of the turbulator. Generally, the temperature sensor may be a thermocouple or a resistive film.

The inventive device may further comprise an analysis unit for determining the heat transfer coefficient and/or for comparing the determined heat transfer coefficient with a reference. The reference may for example be a reference value or a reference range. The reference value or the reference range may be obtained from a nominal or new engine at the same operating point.

Furthermore, the fluid may be used for cooling and/or sealing a component. The fluid may especially be air.

Advantageously, the temperature sensor and the surface may be located in the centre of the cross section of the flow channel.

The inventive turbine comprises an inventive device as described above. The inventive turbine may especially be a gas turbine. In this case the inventive device may, for example, be used for monitoring leakage flow under a turbine guide vane.

The inventive device may also be used in a bearing sealing arrangement, for example in the centre bearing between a compressor and a turbine.

The present invention offers the possibilities to detect capacity changes in fluids used for cooling and sealing purposes, for example in gas turbines, and draw conclusions regarding the causes of the deviation, prior to disassembly by combining single subsequent temperature measurements. The temperature sensor can be used as a conventional temperature sensor, i.e. a thermocouple, between measurements.

The measurements can be carried out continuously, with regular interval, intermittently or in combination with service activities. In the first three cases the instrument has to be installed in the engine. In the fourth case the instrument can be temporarily used during service to establish the status and performance of the engine. In the latter case the instrument may also be used in more demanding areas where the access and space would limit the life of an instrument, if in continuous use.

The use of heat transfer enhancing means on the surface where the temperature sensor is located gives an increased and faster response to variations in flow conditions particularly if the sensor is placed in or near the point where the highest heat transfer occurs, i.e. at the attachment point downstream of the turbulator.

The shape of the body comprising the surface on which the measurements are taking place can be adapted to the shape of the conduit containing the fluid, for example air, to be measured in order to achieve optimal heat transfer.

The heated area of the temperature sensor may be selected such that the power consumption is acceptable, hence it may only cover a small portion of the circumference when used in a conduit with large cross section.

If there is fully developed velocity profile where the temperature sensor is located the measurements will be more accurate in the central area of the cross section of the conduit where the highest velocity can be found. Under different conditions, for example if the measurement is taken in or near a bend, the values obtained closer to the wall of the conduit may prove more accurate for the purpose of the invention.

Even if the example of the parallel monitoring flow scheme is shown for the leakage flow under a turbine guide vane the same principle can be used in different bearing sealing arrangements, for example in the centre bearing, between a compressor and a turbine, typically found on a high pressure shaft of a gas turbine. There will always be a leakage of seal air in this case which eventually mixes with the oil mist and is ventilated to atmosphere through the oil tank. In some designs the bearing sealing arrangement is pressurised to reduce the leakage flow by means of a lower pressure drop over the seal. The pressure is then reduced over an orifice adjacent to the lubrication oil tank. In other designs the full pressure drop from the compressor exit to atmosphere is acting over the seal arrangement, which makes it sensitive to seal wear but offers a simplified design in other respects. Since this bearing is placed in the very centre of the gas turbine it is difficult to access for inspection and when doing so requires a major disassembly.

Using the same technique, for example entering via the guide vane, as described for the parallel flow measurement it would be possible to let the probe reach into the actual seal and do a direct measurement. However, the relative movements of the stationary parts, for example the guide vane, and the rotor during transients could potentially break or damage the temperature sensor. The heat transfer coefficient in the seal itself is normally very high and a local measurement would therefore not give as good accuracy when measuring small changes unless a high power is used in the heating element.

Further features, properties and advantages of the present invention will become clear from the following description of embodiments in conjunction with the accompanying drawings. The described features are advantages alone and in combination with each other.

Fig. 1 schematically shows a conduit in a sectional view which is equipped with a variant of an inventive device for detecting capacity changes in a fluid.

Fig. 2 schematically shows the conduit in a sectional view along the directing which is indicated by II-II in Fig. 1.

Fig. 3 schematically shows a conduit in a sectional view which is equipped with another variant of an inventive device for detecting capacity changes in a fluid.

Fig. 4 schematically shows the conduit which is shown in Fig. 3 in a sectional view along the direction which is indicated by IV-IV in Fig. 3.

Fig. 5 schematically shows a further variant of a conduit with an inventive device for detecting capacity changes.

Fig. 6 schematically shows the conduit which is shown in Fig. 5 in a sectional view long the direction which is indicated by VI-VI in Fig. 5.

Fig. 7 schematically shows another variant of a conduit equipped with an inventive device for detecting capacity changes in a sectional view.

Fig. 8 schematically shows the conduit of Fig.7 in a sectional view along the direction which is indicated by VIII-VIII in Fig. 7.

Fig. 9 schematically shows a further variant of a conduit equipped with an inventive device for detecting capacity changes in a sectional view.

Fig. 10 schematically shows part of the inventive device of Fig. 9 in a sectional view along the direction which is indicated by X-X in Fig. 9.

Fig. 11 schematically shows another variant of the part of the inventive device in sectional view along the direction which is indicated by X-X in Fig. 9.

Fig. 12 schematically shows a further variant of part of the inventive device in a sectional view along the direction which is indicated by X-X in Fig. 9.

Fig. 13 schematically shows a gas turbine.

Fig. 14 schematically shows part of a turbine rotor and a turbine guide vane which is equipped with an inventive device for detecting capacity changes in a sectional view.

Fig. 15 schematically shows a sectional view of the turbine guide vane of Fig. 14 wherein the inventive device is substituted by a bluff body.

Fig. 16 schematically shows part of a turbine rotor and a turbine guide vane equipped with an inventive device in sectional view.

Fig. 17 schematically shows a sectional view of the turbine guide vane of Fig. 16 wherein the inventive device is substituted by a bluff body.

Fig. 18 schematically shows part of the inventive device in a perspective view.

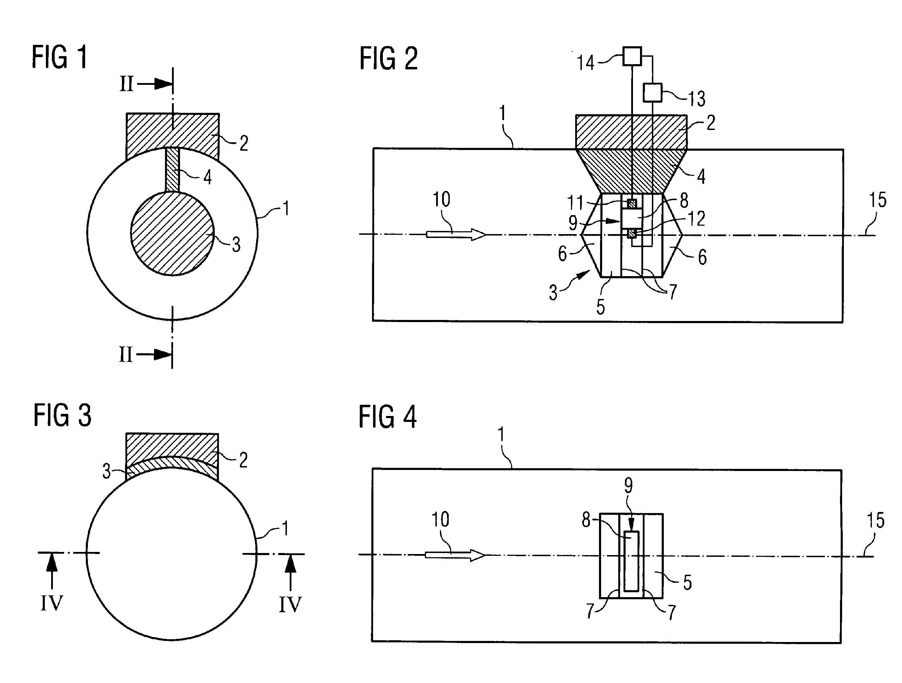

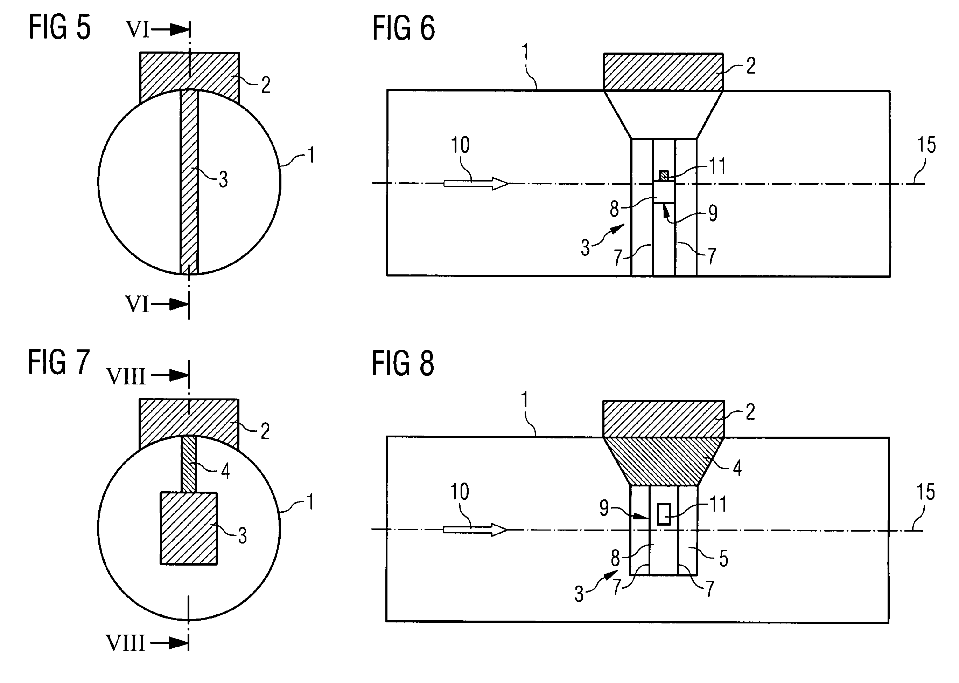

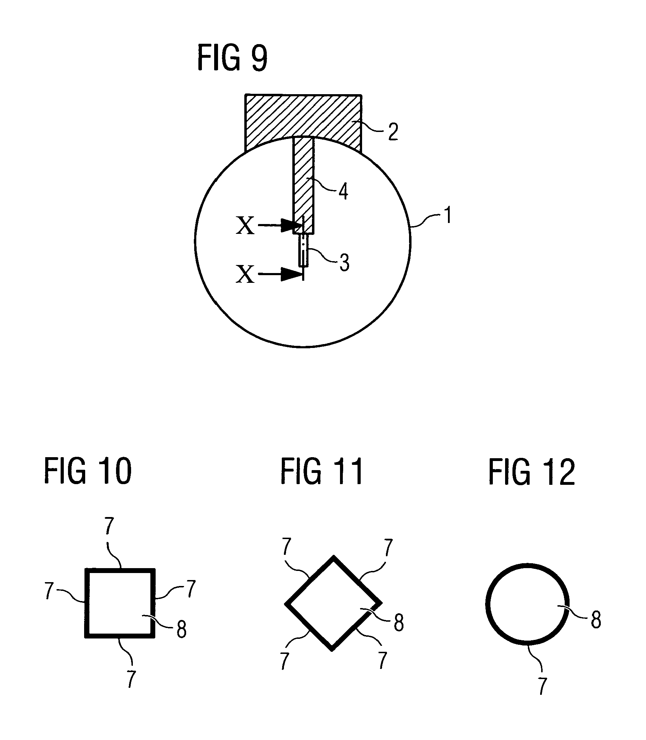

A first embodiment of the present invention will now be described with reference to Figures 1 to 12 and Figure 18. The Figures 1 and 2 show examples of a circular instrument, Figures 3 and 4 show examples of an instrument having the same shape as the wall it is installed flush with. Figures 5 to 8 and Figure 18 show examples of a flat instrument. Figures 9 to 12 show examples of flat "tip" instrument.

Figure 1 schematically shows a conduit 1 which is equipped with a device for detecting capacity changes 3 in a sectional view. The conduit 1 has a circular cross section. The device for detecting capacity changes 3 is located in the centre of the cross section of the conduit 1. The device for detecting capacity changes 3 has a circular cross section. The device for detecting capacity changes 3 is connected to the conduit 1 by means of holding devices 2, 4. The holding device 2 is located outside of the conduit 1 and the holding device 4 is located inside of the conduit 1 and connects device for detecting capacity changes 3 with the outer holding device 2.

Figure 2 schematically shows the inventive device for detecting capacity changes 3 inside the conduit 1 in a sectional view along the direction which is indicated by II-II in Figure 1. The centre line of the conduit 1 is indicated by reference numeral 15. The fluid, for example air, flows through the conduit 1. The flow direction is indicated by an arrow 10. In the centre of the conduit 1, which means near the centre line 15, the device for detecting capacity changes 3 is located. It is connected to the conduit 1 by means of the holding devices 2, 4.

The device for detecting capacity changes 3 has a circular cross section, as shown in Figure 1, and comprises a cylindrical portion 5 and two conical portions 6. The conical portions 6 provide that the device for detecting capacity changes 3 has an aerodynamic shape.

The cylindrical portion 5 comprises two turbulators 7 which are spaced from each other in flow direction 10. In principle only one turbulator 7 is needed located upstream of the measurement area in order to create turbulence. However, it is advantageous to design the instrument such that it is capable of cooping with different flow directions as well as minimising the consequences of an incorrect installation, for example if the turbulator is located downstream of the measurement area.

Between the two turbulators 7 a surface 8 which can be heated by means of a heating element 12 is located. The surface 8 which can be heated extends in flow direction 10 from the first turbulator 7 to the second turbulator 7. The heating element 12 is connected to an external power supply 13. The surface 8 which can be heated is further equipped with a temperature sensor 11. Preferably the temperature sensor 11 is placed in the centre of the surface 8. By means of the temperature sensor 11 the temperature of a measurement section 9 of the surface 8 can be measured. The temperature sensor 11 and the external power supply 13 are connected to an analysis unit 14. By means of the analysis unit 14 the measured temperatures and the supplied power are recorded. Moreover the heat transfer coefficient of the fluid is determined by means of the analysis unit. The determined heat transfer coefficient can further be compared with a reference by means of the analysis unit 14.

Figure 3 schematically shows another variant of the conduit 1 which is equipped with an inventive device for capacity changes 3 in a sectional view. This installation represents a situation where the highest or a higher velocity can be found near the inner wall of the conduit, for example if the conduit shown in Figure 4 is located directly or shortly after a sharp bend. In this case it is advantageous to make the measurement at the wall. This is achieved by installing the instrument flush with the wall of the conduit. In this situation there would not be any particular need for the intermediate holding device 4, since the device for detecting capacity changes 3 would be held by the holding device 2.

Elements corresponding to elements of Figures 1 and 2 will be designated with the same reference numerals in all Figures 3 to 17 and will not be described again in detail.

Figure 4 schematically shows the conduit 1 in a sectional view along the direction which is indicated by IV-IV in Figure 3. The curved portion 5a of the device for detecting capacity changes 3 comprises two turbulators 7 which are spaced from each other in flow direction 10. The surface 8 which can be heated and the measurement section 9 are located between turbulators 7. In contrast to Figure 2, the surface 8 which can be heated and the measurement section 9 are not in contact with the turbulators 7.

Figure 5 schematically shows another variant of the conduit 1 which is equipped with a flat type of an inventive device for detecting capacity changes 3 in a sectional view. The conduit 1 has a circular cross section. The device for detecting capacity changes 3 is located along the diameter of the conduit 1 and is connected to the conduit 1 by means of a holding device 2 which is located outside the conduit 1.

Figure 6 schematically shows the conduit 1 of Figure 5 in a sectional view along the direction which is indicated by VI-VI in Figure 5. The device for detecting capacity changes 3 comprises two turbulators 7 which extend along the whole diameter of the conduit 1 and which are spaced from each other in flow direction 10. The surface 8 which can be heated and the measurement section 9 with the temperature sensor 11 are located between the two turbulators 7.

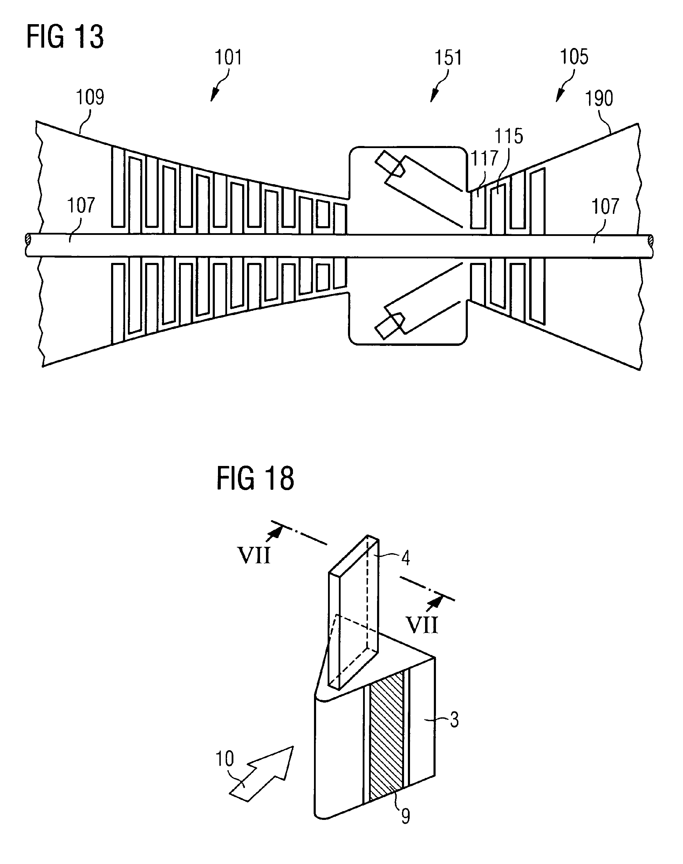

Figure 7 schematically shows a sectional view of another variant of a flat type of the inventive device for detecting capacity changes 3 located in a conduit 1. The device for detecting capacity changes 3 in Figure 7 has a triangular cross section (see Figure 18) and is located in the centre of the conduit 1 which has a circular cross section. The device for detecting capacity changes 3 is connected to the conduit 1 by means of holding devices 2, 4 as described in conjunction with Figure 1.
Figure 18 schematically shows part of the inventive device for detecting capacity changes 3 with a holding device 4 in a perspective view. The section which is shown in Figure 7 is indicated by VII-VII. The arrow 10 indicates the flow direction.

Figure 8 schematically shows a sectional view of the conduit 1 of Figure 7 along the direction which is indicated by VIII-VIII in Figure 7. The device for detecting capacity changes 3 is located near the centre line 15 and comprises two turbulators 7 which are spaced from each other in flow direction 10. Between the two turbulators 7 the surface 8 which can be heated and the measurement section 9 are located. In contrast to Figure 6 the device for detecting capacity changes 3 does not extend along the whole diameter of the conduit 1.

Figure 9 schematically shows a conduit 1 in a sectional view. The conduit 1 is equipped with a flat device for detecting capacity changes 3 which has the shape of a "tip". The conduit 1 has a circular cross section. The device for detecting capacity changes 3 is located in the centre of the cross section of the conduit 1 and is connected to the conduit by means of holding devices 2, 4 as described in conjunction with Figure 1.

Figures 10 to 12 schematically show different variants of cross sections of the device for detecting capacity changes 3 in the direction which is indicated by X-X in Figure 9. In Figure 10 and 11 the surface 8 which can be heated has a rectangular cross section and is surrounded by turbulators 7 on all edges. In Figure 10 the device for detecting capacity changes 3 is connected to the holding device 4 at an edge of the rectangle formed by the turbulators 7. In contrast, in Figure 11 the device for detecting capacity changes 3 is connected to the holding device 4 at a corner of the rectangle formed by the turbulators 7. In Figure 12 the surface 8 which can be heated has a circular cross section and is surrounded by a turbulator 7.

The conduit does not have to have a circular cross section, it can be rectangular or of any other shape.

Generally, in all variants shown in Figure 1 to 12 the temperature sensor 11 is preferably located in the centre of the surface 8 which can be heated and can optionally be double sided to improve the response time of the device.

Now a second embodiment of the present invention will be described with reference to Figures 13 to 17. Figure 13 schematically shows a gas turbine. A gas turbine comprises a rotation axis with a rotor. The rotor comprises a shaft 107. Along the rotor a suction portion with a casing 109, a compressor 101, a combustion portion 151, a turbine 105 and an exhaust portion with a casing 190 are located.

The combustion portion 151 communicates with a hot gas flow channel which may have a circular cross section, for example. The turbine 105 comprises a number of turbine stages. Each turbine stage comprises rings of turbine blades. In flow direction of the hot gas in the hot gas flow channel a ring of turbine guide vanes 117 is followed by a ring of turbine rotor blades 115. The turbine guide vanes 117 are connected to an inner casing of a stator. The turbine rotor blades 115 are connected to the rotor. The rotor is connected to a generator, for example.

During operation of the gas turbine air is sucked and compressed by means of the compressor 101. The compressed air is led to the combustion portion 151 and is mixed with fuel. The mixture of air and fuel is then combusted. The resulting hot combustion gas flows through a hot gas flow channel to the turbine guide vanes 117 and the turbine rotor blades 115 and actuates the rotor.

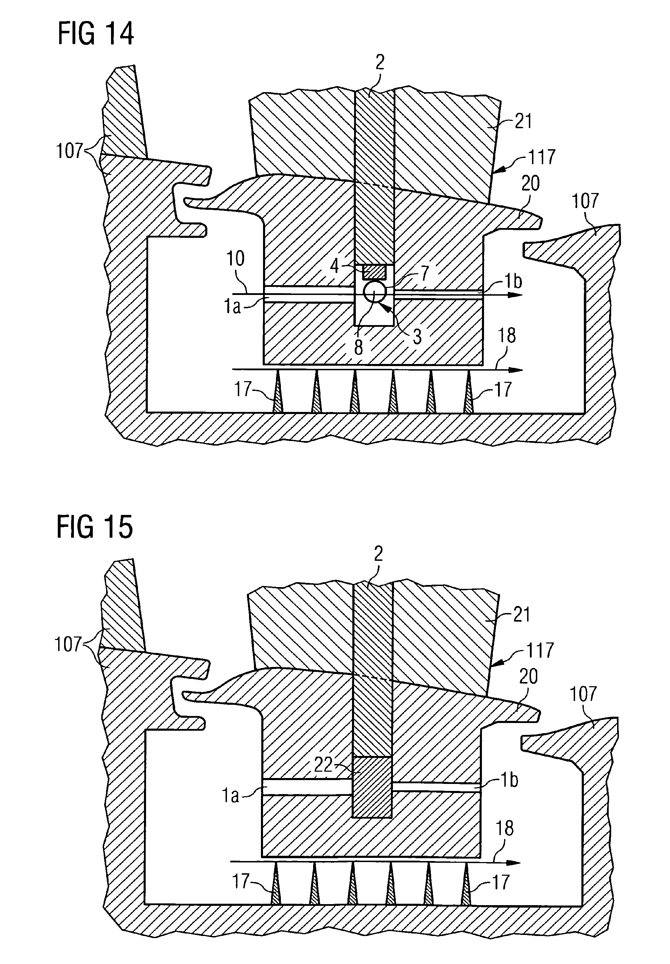

The Figures 14 to 17 schematically show part of a turbine rotor 107 and part of a turbine guide vane 117 in a sectional view. The turbine guide vane 117 in the Figures 14 to 17 comprises a platform 20 and an airfoil 21. Between the platform 20 and the rotor 107 a seal 17 is located. The leakage flow through the seal 17 is indicated by reference numeral 18.

In Figure 14 the platform 20 of the turbine guide vane 117 comprises a conduit 1a, 1b through which a fluid, for example air, can flow through the platform 20 parallel to the leakage flow direction 18. Near the centre of the platform 20 an inventive device for detecting capacity changes 3 is located such that the fluid which flows through the conduit 1a, 1b passes the device 3. The device for detecting capacity changes 3 is fixed inside of the platform 20 of the turbine guide vane 117 by means of holding devices 2, 4. The holding device 2 extends through the platform 20 and through the airfoil 21. The holding device 4 connects the device for detecting capacity changes 3 with the holding device 2. The portion 1a of the conduit leads the fluid, for example air, to the device for detecting capacity changes 3. The portion 1b of the conduit leads the fluid away from the device for detecting capacity changes 3. The portion 1a of the conduit may have a larger cross section then the portion 1b of the conduit.

The device for detecting capacity changes 3 comprises a ringshaped turbulator 7 and a surface 8 which can be heated. The surface 8 which can be heated is located inside of the turbulator 7 and has a circular cross section. On the surface 8 a temperature sensor, which is not shown in Fig. 14, is placed.

Figure 14 shows an example for a parallel flow measurement. The parallel flow measurement is a measurement at a single or a few discrete points around the circumference. The added leakage from the measurement is small. Should the temperature sensor just be used in connection with or during service the added leakage path 1a, 1b can be sealed by means of a bluff body 22, for example a rod, that cut off the conduit 1a, 1b for the fluid, which is air in the present embodiment. This is schematically shown in Figure 15. In contrast to Figure 14, the portion where the device for the detecting capacity changes 3 is located in Figure 14 is sealed in Figure 15 by means of a bluff body 22. The bluff body 22 is connected to a holding device 2.

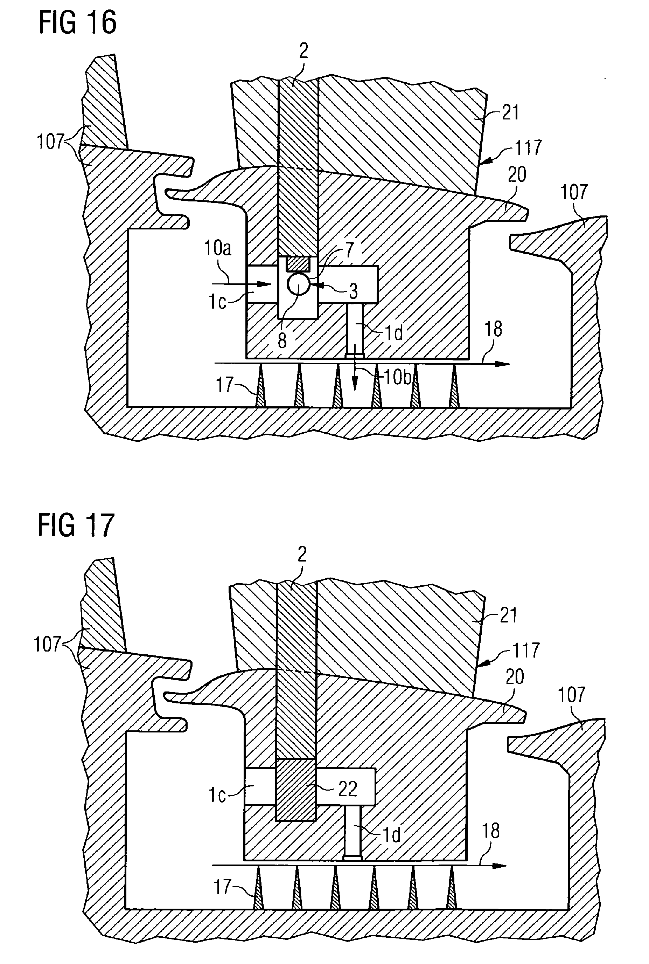

Figures 16 und 17 schematically show another variant of part of a turbine guide vane 117 and part of a turbine rotor 107 in a sectional view. In Figure 16 the platform 20 of the turbine guide vane 117 is equipped with a device for detecting capacity changes 3 as described in conjunction with Figure 14. In Figure 17 the portion were the device for detecting capacity changes 3 in Figure 16 is located is sealed by means of a bluff body 22 in the same way as described in conjunction with Figure 15. In contrast to the variant which is shown in Figures 14 and 15 the arrangement which is shown in Figures 16 and 17 monitors the performance of a section of the seal configuration 17.

In Figure 16 the platform 20 comprises a conduit 1c through which a fluid, for example air, can flow to and away from the device for detecting capacity changes 3. In the conduit 1c the fluid flows parallel to the leakage flow direction 18. The flow direction in the conduit 1c is indicated by reference numeral 10a. The conduit 1c is further connected to a conduit 1d which connects the conduit 1c with the seal configuration 17. The fluid can flow through the conduit 1d away from device for detecting capacity changes 3 towards the seal configuration 17. The fluid flows through the conduit 1d perpendicular to the leakage flow direction 18. The flow direction in the conduit 1d is indicated by reference numeral 10b. In the Figure 16 and 17 the conduit 1c may have a larger cross section then the conduit 1d.

In Figure 17 the conduit 1c is sealed with a bluff body 22 at the location where the device for detecting capacity changes 3 is located in Figure 16.

Generally, the device for detecting capacity changes 3 in the second embodiment has the same properties as the device for detecting capacity changes 3 which was described in conjunction with Figures 1 to 12.

For detecting capacity changes of the used fluid in the conduit 1, 1a, 1b, 1c, 1d the fluid, which may be cooling air, is led to the surface 8. The surface 8 has a defined area A. The heat transfer at the surface 8 is enhanced by means of the turbulators 7.

The temperature To of the fluid is measured. Then the surface 8 is heated by means of a heating element 12 which may be connected to an external power supply 13. The power ΔQ/Δt which is supplied during heating the surface 8 is recorded, for example by means of an analysis unit 14. Then the temperature T₁ of the heated surface 8 is measured. The temperatures T₀ and T₁ are recorded and the corresponding measurement signal is sent to the analysis unit 14. Then the heat transfer coefficient h is determined using the area A, the temperature To of the fluid, the recorded power ΔQ/Δt and the temperature T₁ of the heated surface 8. The calculation of the heat transfer coefficient h is performed by the analysis unit 14. The determined heat transfer coefficient h is then compared with a reference. The reference can be a reference value or a reference range from a nominal or new gas turbine at the same operating point.

The used temperature sensor can be a thermocouple or a resistive film.

The temperature To of the fluid and/or the temperature T₁ of the heated surface 8 can be measured continuously or in a regular interval or intermittently or in combination with service activities.

In summary, the invention offers the possibility to detect capacity changes in flows used for cooling and sealing purposes in gas turbines and to draw conclusions regarding the causes of possible deviations prior disassembly by combining single subsequent temperature measurements.

## Claims

1. A method for detecting capacity changes in a fluid in a flow channel (1), comprising the steps of:
- leading the fluid to a surface (8) of a defined area A, where the heat transfer is enhanced compared with other portions of the flow channel (1),
- measuring the temperature To of the fluid,
- heating the surface (8),
- recording the power ΔQ/Δt which is supplied during heating the surface (8),
- measuring the temperature T₁ of the heated surface (8),
- determining the heat transfer coefficient h of the fluid, and
- comparing the determined heat transfer coefficient h with a reference.

2. The method as claimed in claim 1, wherein the temperature To of the fluid is measured at the surface (8), when the surface (8) is not heated.

3. The method as claimed in claim 1 or 2, wherein the temperature To of the fluid and the temperature T₁ of the heated surface (8) are measured by means of the same measurement instrument (11).

4. The method as claimed in any of the claims 1 to 3, wherein the temperature To of the fluid and/or the temperature T₁ of the heated surface are/is measured by means of a thermocouple or a resistive film.

5. The method as claimed in any of the claims 1 to 4, wherein the heat transfer of the surface (8) is enhanced by means of at least one turbulator (7).

6. The method as claimed in any of the claims 1 to 5, wherein the determined heat transfer coefficient is compared with a reference value or a reference range from a nominal or new engine at the same operating point.

7. The method as claimed in any of the claims 1 to 6, wherein the fluid is used for cooling and/or sealing a component.

8. The method as claimed in any of the claims 1 to 7, wherein the fluid is used in a gas turbine (105).

9. The method as claimed in any of the claims 1 to 8, wherein the temperature To of the fluid and/or the temperature T₁ of the heated surface (8) are/is measured continuously or in a regular interval or intermittently or in combination with service activities.

10. A device for detecting capacity changes (3) in a fluid by determining the heat transfer coefficient of the fluid, wherein the device (3) comprises a flow channel (1) for leading the fluid, at least one temperature sensor (11), a surface (8) with an enhanced heat transfer compared with the heat transfer of other portions of the flow channel (1), and a device for heating the surface (12), the at least one temperature sensor (11) being located at the surface (8) with the enhanced heat transfer.

11. The device (3) as claimed in claim 10, wherein the temperature sensor (11) is placed at or near the point where the highest heat transfer occurs.

12. The device (3) as claimed in claim 10 or 11, wherein the device (3) comprises at least one turbulator (7) for enhancing the heat transfer of the surface (8).

13. The device (3) as claimed in claim 12, wherein the temperature sensor (11) is placed at an attachment point downstream of the turbulator (7).

14. The device (3) as claimed in any of the claims 10 to 13, wherein the temperature sensor (11) is a thermocouple or a resistive film.

15. A turbine comprising a device (3) as claimed in any of the claims 10 to 14.
